# EUROPÄISCHE PATENTANMELDUNG

(11) **EP 1 944 725 A1**
(43) Veröffentlichungstag der Anmeldung: **16.07.2008**
(21) Anmeldenummer: 08000018.5
(22) Anmeldetag: 02.01.2008
(51) Int. Cl.: G06Q 10/00, G08G 1/123

(54) **Verfahren zum Belegen von Transportmitteln mit zu transportierenden Personen und/oder Gütern und zugehöriges System**

(30) Priorität: 11.01.2007 DE 102007001710
(71) Anmelder: GPSoverIP GmbH, 97424 Schweinfurt (DE)
(72) Erfinder: Jurleit, André, 97502 Euerbach (DE)
(74) Vertreter: Gosdin, Michael

(57) **Zusammenfassung**

Die Erfindung betrifft ein Verfahren zum Belegen von Transportmitteln (1), bei dem ein über eine Datenfernübertragungseinrichtung (4) abrufbares ortsfestes Speichermittel (2) samt Rechenmittel (3) und Datenfernübertragung (4) zum Einsatz kommt, in dem bzw. aus dem Daten von zur Verfügung stehenden Transportmitteln (1) gespeichert und abrufbar sind. Um eine optimale Nutzung bzw. Belegung von Transportmitteln aller Art zu erreichen, sieht das vorgeschlagene Verfahren die Schritte vor: a) Speichern von Parametern (P) für Transportmitteln (1); b) Auslösen einer Sendefunktion durch den Führer des Transportmittels (1), durch das eine Sendevorrichtung (5) betätigt wird, die die Schritte veranlasst: b₁) Ermittlung des Aufenthaltsortes (O₁) des Transportmittels (1); b₂) Übermittlung einer Information (S) an das Speichermittel (2), das zumindest den Aufenthaltsort (O_{I}) des Transportmittels (1) sowie die Mitteilung umfasst, dass das Transportmittel (1) für einen Transportauftrag zur Verfügung steht; c) Übermittlung einer Anfrage (A) von einem Versender-Rechner (7) an die Rechenmittel (3); d) Automatisches Auslesen der im Speichermittel (2) gespeicherten Informationen über verfügbare Transportmittel (1); e) Übertragung von Informationen über die Identität des Transportmittels (1) von dem Rechenmittel (3) an den Versender-Rechner (7) zur Ermöglichung der Kontaktaufnahme mit dem Führer des Transportmittels (1) durch den den Versender-Rechner (7) benutzenden Versender. Des weiteren betrifft die Erfindung ein System zur Durchführung des Verfahrens.

## Beschreibung

Die Erfindung betrifft ein Verfahren zum Belegen von Transportmitteln mit zu transportierenden Personen und/oder Gütern, bei dem ein über eine Datenfernübertragungseinrichtung abrufbares ortsfestes Speichermittel zum Einsatz kommt, in dem bzw. aus dem Daten von zur Verfügung stehenden Transportmitteln gespeichert und abrufbar sind, wobei das Speichermittel mit einem Rechenmittel in Verbindung steht, das über die Datenfemübertragungseinrichtung mit Nutzern kommunizieren kann. Des weiteren betrifft die Erfindung ein System zum Belegen von Transportmitteln mit zu transportierenden Personen und/oder Gütern.

Ein Verfahren der gattungsgemäßen Art ist im Stand der Technik bekannt. Beispielsweise sind Mitfahrzentralen bekannt geworden, die ein Verfahren einsetzen, bei dem über eine Datenfernübertragung in Form des Internets ein Kontakt zwischen einem Fahrer und einem Mitfahrer hergestellt wird. Zum Auffinden eines geeigneten Fahrers oder Mitfahrers werden per Internet von einem Fahrer Daten in eine Datenbank, d. h. in ein Speichermittel, eingestellt, die von einem Rechenmittel ausgelesen werden können. Meldet sich ein Mitfahrer mit einem konkreten Mitfahrwunsch, werden nach Definition desselben (Abfahrt- und Zielort sowie der Abfahrzeit) durch das Rechenmittel die relevanten Fundstellen ermittelt und per Internet an den Mitfahrer ausgegeben. Nunmehr kann in geeigneter Weise eine Kontaktaufnahme zwischen Mitfahrer und Fahrer hergestellt werden.

Wenngleich dies Verfahren grundsätzlich auch im gewerblichen Bereich und insbesondere beim Gütertransport eingesetzt werden kann, leiden derartige Lösungen noch darunter, dass dort die Handhabung sehr viel schwieriger ist, da sehr viel mehr Informationen abgeglichen werden müssen, als im Falle der Suche nach einer Mitfahrgelegenheit. Zu nennen sind fahrzeugspezifische Daten bzw. Parameter, die abgefragt und abgeglichen werden müssen, sowie geplante Routen. Hiefür sind in der Regel personalintensive Maßnahmen zu ergreifen, um einen Anbieter in Form eines zur Verfügung stehenden Fahrzeugs und einen Nutzer in Form eines Versenders zusammenzuführen.

Der Erfindung liegt daher die Aufgabe zugrunde, auch und vor allem bei gewerblichen Transporten aller Art ein Verfahren sowie ein entsprechendes System zur Verfügung zu stellen, die bezüglich der oben festgestellten Nachteile Verbesserungen schaffen. Es soll also möglich werden, auch relativ komplexe Anforderungen an ein Transportprojekt zwischen anbietendem Fahrzeugführer bzw. -inhaber und Versender zu koordinieren, wobei ein wichtiger Aspekt die einfache Handhabung ist, damit Fahrer auch von unterwegs aus - gegebenenfalls während der Fahrt - mit minimalem Aufwand ihre Dienste schnell und ohne hohen Aufwand anbieten können.

Die Lösung dieser Aufgabe durch die Erfindung ist verfahrensgemäß durch folgende Schritte gekennzeichnet:
a) Speichern eines Satzes Parameter für eine Vielzahl von Transportmitteln in dem Speichermittel, wobei der Satz Parameter die für den Transport relevanten Informationen eines Transportmittels beinhaltet; dieser Schritt erfolgt dabei vorzugsweise nur ein einziges Mal pro Transportmittel, abgesehen von gegebenenfalls erforderlichen Korrekturen der Parameter;
b) Auslösen einer Sendefunktion durch den Führer des Transportmittels, durch das eine Sendevorrichtung betätigt wird, die die Schritte veranlasst:
   b₁) Ermitteln des Aufenthaltsortes des Transportmittels mittels eines Ortungssystems;
   b₂) Übermitteln einer Information an das Speichermittel, das zumindest den Aufenthaltsort des Transportmittels sowie die Mitteilung umfasst, dass das Transportmittel für einen Transportauftrag zur Verfügung steht;
c) Übermitteln einer Anfrage von einem Versender-Rechner über die Datenfernübertragungseinrichtung an das Rechenmittel, wobei die Anfrage zumindest einen Startort eines gewünschten Transports umfasst;
d) Automatisches Auslesen der im Speichermittel gespeicherten Informationen über alle verfügbaren Transportmittel, deren Aufenthaltsort innerhalb eines vorgegebenen Bereichs um den vorgegebenen Startort liegt; und
e) Übertragen von Informationen über die Identität des Transportmittels bzw. des Führers des Transportmittels für zumindest einen Teil der gemäß Schritt d) ausgelesenen Transportmittel von dem Rechenmittel über die Datenfemübertragungseinrichtung an den Versender-Rechner zur Ermöglichung der Kontaktaufnahme mit dem Führer des Transportmittels durch den den Versender-Rechner benutzenden Versender.

Die Erfindung stellt verfahrensgemäß also darauf ab, dass in einer zentralen Datenbank (d. h. in dem Speichermittel) ein Profil in Form diverser relevanter Parameter hinterlegt wird, das das zur Verfügung stehende Transportmittel charakterisiert. Ist das Transportmittel frei, betätigt der Fahrer lediglich eine Taste an der erwähnten Sendevorrichtung, die dann im Zusammenwirken mit dem zentralen Speichermittel alles weitere veranlasst. Es werden zunächst automatisch die Positionsdaten des Transportmittels festgestellt und zusammen mit (zumindest) der Information an das Speichermittel übertragen, dass das Transportmittel verfügbar ist. Versender, die eine Versende- bzw. Transportmöglichkeit suchen, können dann über einen Versender-Rechner auf das Rechenmittel bzw. auf das Speichermittel zugreifen, und ihre Anfrage eingeben, wobei dann nach Art einer Suchmaschine passende Transportmittel über die Rechenmittel ausgegeben werden, zusammen mit Identifikations- bzw. Kommunikationsdaten, die es dem Versender ermöglicht, Kontakt mit dem Transportmittel, d. h. mit dem Fahrer oder seiner Spedition aufzunehmen.

Freilich ist es dabei möglich, dass dieser Kontakt auch automatisch hergestellt wird, wobei ein ausgewähltes Transportmittel über das Rechenmittel per Datenfernübertragung (Internet) kontaktiert wird, um den entsprechenden Wunsch nach Transport zu kommunizieren.

Zumal wird es von Vorteil bzw. sinnvoll sein, wenn die nach obigem Schritt b₂) übermittelten Informationen weiterhin einen Zielort des Transportmittels umfassen, den der Führer des Transportmittels in die Sendevorrichtung eingibt. Weiterhin ist es sinnvoll, dass diese Informationen weiterhin eine im Transportmittel zur Verfügung stehende Transportkapazität umfassen, die der Führer des Transportmittels in die Sendevorrichtung eingibt. Ferner kann vorgesehen werden, dass diese Informationen weiterhin eine geplante Startzeit für die Abfahrt aus dem Bereich umfassen, die der Führer des Transportmittels in die Sendevorrichtung eingibt.

Die nach obigem Schritt a) gespeicherten Parameter können vorzugsweise besondere Merkmale des Transportmittels umfassen, insbesondere die Ladekapazität für Personen bzw. Güter, die Möglichkeit zum Gefahrguttransport, die Möglichkeit zum Kühltransport oder die zur Verfügung stehenden Zielorte oder -länder. D. h. die Parameter können ein umfassendes Fahrzeugprofil definieren, das den Charakteristika des Transportmittels entspricht.

Die nach obigem Schritt c) übermittelte Anfrage vom Versender, der ein geeignetes Transportmittel sucht, wird in der Regel weiterhin einen Zielort des gewünschten Transports umfassen, den der Versender an die Rechenmittel überträgt. Die Anfrage kann weiterhin weitere Merkmale des Transportmittels umfassen, insbesondere die benötigte Ladekapazität für Personen bzw. Güter, das Benötigen eines Gefahrguttransports oder das Benötigen eines Kühltransports. Ferner kann die Anfrage weiterhin einen gewünschten vorgegebenen Bereich um den vorgegebenen Startort umfassen, der bei obigem Schritt d) zugrunde gelegt wird, um in Frage kommende Transportmittel auswählen zu können.

Das automatische Auslesen der im Speichermittel gespeicherten Informationen nach obigem Schritt d) erfolgt bevorzugt so, dass nur solche Transportmöglichkeiten ausgegeben werden, die die durch die Anfrage definierten Bedingungen erfüllen.

Zur Ortung wird bevorzugt ein Ortungssystem auf der Basis einer GPS- oder Galileo-Ortung eingesetzt.

Die Kommunikation der Sendevorrichtung mit dem Rechenmittel und/oder diejenige des Versender-Rechners mit dem Rechenmittel erfolgt bevorzugt über das Internet mittels GPRS, UMTS oder WIMAX.

Das System zum Belegen von Transportmitteln mit zu transportierenden Personen und/oder Gütern, die ein mit einem Rechenmittel in Verbindung stehendes und über eine Datenfernübertragungseinrichtung abrufbares ortsfestes Speichermittel umfasst, in dem bzw. aus dem Daten von zur Verfügung stehenden Transportmitteln gespeichert und abrufbar sind, sieht erfindungsgemäß vor, dass es weiterhin für eine Vielzahl von Transportmitteln und eine Vielzahl von Versendern umfasst:
- Sendevorrichtungen, die jeweils in einem Transportmittel angeordnet sind, wobei jede Sendevorrichtung ein Ortungssystem aufweist, das den Aufenthaltsort des Transportmittels ermitteln kann, und wobei jede Sendevorrichtung ein Betätigungselement aufweist, mit dem die Sendevorrichtung zum Aussenden eines Signals an das Speichermittel veranlasst werden kann, und
- Versender-Rechner zur Eingabe von Anfragen über ein gewünschtes Transportmittel, wobei jeder Versender-Rechner über eine Datenfernübertragungseinrichtung mit dem Rechenmittel in Verbindung treten kann.

Mit dem erfindungsgemäßen Vorschlag wird es in sehr einfacher Weise möglich, die Logistik insbesondere bei der Güterbeförderung zu verbessern und dafür Sorge zu tragen, dass eine optimale Auslastung verfügbarer Transportmittel erzielbar ist, d. h. dass Leerfahrten minimiert werden.

In der Zeichnung ist ein Ausführungsbeispiel der Erfindung dargestellt. Die einzige Figur zeigt schematisch ein Transportmittel in Form eines LKW, das drahtlos mit einem Rechenmittel samt Speichermittel in Verbindung steht, sowie den Rechner eines Versenders, der ebenfalls drahtlos mit dem Speichermittel kommuniziert.

Ein Transportmittel 1 in Form eines Lastkraftwagens ist in einem Raum unterwegs, in den es in Folge eines Transportauftrags gelangt ist. Der fragliche Transportauftrag ist weitgehend abgeschlossen bzw. der Fahrer kann absehen, dass er in Kürze Kapazität für einen weiteren Transport frei haben wird. In seinem Fahrzeug 1 befindet sich eine Sendevorrichtung 5. Diese hat ein GPS-Ortungssystem 6, das die aktuellen Ortskoordinaten ermitteln kann.

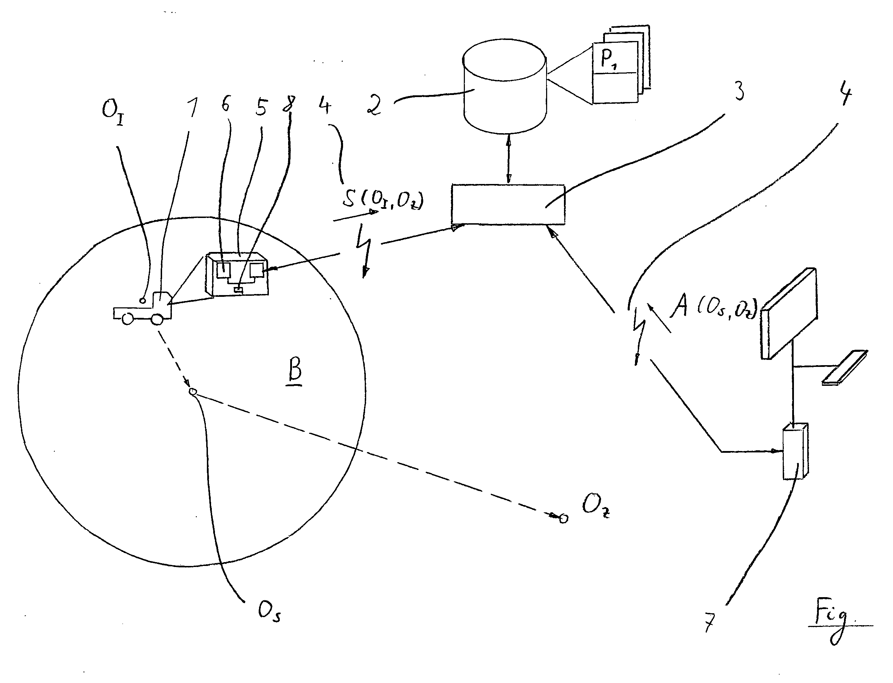

Das in Fig. 1 dargestellte System hat ferner ein ortsfestes Speichermittel 2, das mit einem Rechenmittel 3 in Verbindung steht. Es handelt sich bei diesen Komponenten um im Zusammenhang mit dem Internet-Betrieb hinlänglich bekannte Elemente, d. h. um einen Server, der über eine Datenfernübertragungseinrichtung 4 drahtlos oder per Draht (Telefon bzw. DSL) mit anderen Rechenmitteln kommunizieren kann.

Vorliegend kann die Sendevorrichtung 5 drahtlos über die Datenfernübertragungseinrichtung 4 mit dem Rechenmittel 3 in Verbindung treten und Daten übertragen.

In Kommunikationsverbindung mit dem Rechenmittel 3 kann auch ein Versender-Rechner 7 treten, was ebenfalls über eine Datenfemübertragungseinrichtung 4 erfolgen kann. Der Versender-Rechner 7 ist schematisch als Rechner samt Tastatur und Bildschirm illustriert.

Die Vorgehensweise zum Betrieb des Systems ist wie folgt.

Vor der erstmaligen Nutzung des Systems muss ein Transportmittel 1 in dem Speichermittel 2 registriert werden. Namentlich wird ein Satz Parameter P für eine Vielzahl von Transportmitteln 1 in dem Speichermittel 2 gespeichert.

Der Parametersatz weist dabei alle für den Transport relevanten Informationen des Transportmittels 1 auf. Das können typische Fahrzeugdaten wie Ladegewicht und Ladevolumen sein, aber auch Spezifika wie die Eignung für Gefahrguttransporte und Kühltransporte. Weiterhin können die Parameter auch Informationen umfassen, die darüber Auskunft geben, für welche Fahrtrouten bzw. für welche Zielländer das Transportmittel 1 zur Verfügung steht.

Typisch ist die Hinterlegung der Parameter für die Angabe, ob Personen und/oder Fracht befördert werden kann, der Kapazität des Transportmittels, der Eigenschaften der Fracht (Kühlgut, Gefahrgut), der befahrbaren Regionen und der üblichen Fahrtage. Dieses Profil des Transportmittels kann bei Bedarf natürlich geändert werden.

Ein weiteres Beispiel für das Profil ist eine Mitfahrgelegenheit. Ein Pendler, der zu einer gewissen Zeit eine bestimmte Rute fährt, kann im Speichermittel 2 hinterlegen, dass er eine bestimmte Anzahl an Personen mitnehmen kann. Ebenso können Paketdienste ein Profil hinterlegen, von wo nach wo diese noch Ressourcen bzw. Kapazitäten frei haben.

Ist das Transportmittel 1 bereit, einen neuen Speditionsauftrag anzunehmen, betätigt der Fahrer des Transportmittels 1 ein Betätigungselement 8 (Taste) an der Sendevorrichtung 5. Damit werden automatisch durch die Sendevorrichtung 5 folgende Schritte veranlasst:

Zunächst ermittelt die Sendevorrichtung 5 mittels des Ortungssystems 6 den aktuellen Aufenthaltsortes O_{I} des Transportmittels 1. Dann übermittelt die Sendevorrichtung 5 eine Information S an das Speichermittel 2, das zumindest den Aufenthaltsort O_{I} des Transportmittels 1 sowie die Mitteilung umfassen muss, dass das Transportmittel 1 für einen Transportauftrag zur Verfügung steht.

Diese Information S wird im Speichermittel 2 gespeichert.

Zumeist wird weiterhin der Zielort O_{Z} des Transportmittels 1 mit übertragen und im Speichermittel 2 abgespeichert, d. h. der Ort, den der Fahrer planmäßig anfahren würde, sofern ein neuer Speditionsauftrag hieran nichts ändert.

Weiterhin kann die Information S die verfügbare (Rest-)Kapazität und die geplante Abfahrtzeit an einem bestimmten Ort umfassen.

Besteht für einen Versender die Notwendigkeit nach einem Transportmittel für einen konkreten Speditionsauftrag, übermittelt der Versender eine Anfrage A von dem Versender-Rechner 7 über die Datenfernübertragungseinrichtung 4 an das Rechenmittel 3, wobei die Anfrage zumindest einen Startort Oₛ eines gewünschten Transports umfassen muss. Zumeist wird natürlich auch der benötigte Zielort übertragen werden, der idealer Weise dem Zielort O_{Z} des Transportmittels 1 entspricht, den die Sendevorrichtung 5 an das Speichermittel 2 übertragen hat.

Nach Absetzen der Anfrage A durch den Versender veranlasst das Rechenmittel 3 ein automatisches Auslesen der im Speichermittel 2 gespeicherten Informationen über alle verfügbaren Transportmittel 1, deren Aufenthaltsort O_{I} innerhalb eines vorgegebenen Bereichs B um den vorgegebenen Startort O_{S} liegt. Dieser Bereich - vorzugsweise ein Radius um den Startort O_{S} - kann durch den Versender definiert werden, d. h. er kann bei seiner Anfrage A die Größe des Bereichs B mit definieren. Weiterhin kann die Anfrage A Spezifika des Transportmittels umfassen, die benötigt werden (z. B. Gefahrguttransport, Kühltransport).

Schließlich erfolgt ein Übertragen von Informationen über die Identität des Transportmittels 1 bzw. des Führers des Transportmittels 1 für zumindest einen Teil der ausgelesenen Transportmittel 1 vom Rechenmittel 3 über die Datenfernübertragungseinrichtung 4 an den Versender-Rechner 7 zur Ermöglichung der Kontaktaufnahme mit dem Führer des Transportmittels 1 durch den Versender.

Das Verfahren kann natürlich sowohl für die Personen- als auch für die Frachtbeförderung eingesetzt werden.

An den Versender werden infolge seiner Anfrage A also die verfügbaren Transportmittel kommuniziert, die sich innerhalb eines definierten Umkreises vom Startort O_{S} des Transports aus befinden, die zumindest einem Teil der vorgegebenen Spezifikation entsprechen. Diese Transportmittel werden am Versender-Rechner 7 angezeigt.

Gegebenenfalls kann auch umgekehrt vorgesehen werden, dass der Versender über die Suchmaschine seinen Wunsch eingibt, der an potientielle Fahrer übertragen wird.

Neben Fahrzeugen kann das Verfahren natürlich auch genauso mit Blick auf Schiffe oder Flugzeuge oder andere Transportmittel angewandt werden.

Ein Fahrzeug-Führer hat die Möglichkeit, durch eine einfache Eingabefunktion - namentlich durch einfaches Betätigen des Betätigungselements 8 - zu übermitteln, ob er in der Suchmaschine (also im Rechenmittel 3 samt Speichermittel 2) angezeigt wird oder nicht.

Die Angabe der Orts-Position und der Verfügbarkeit wird von der Sendevorrichtung 5 (Tracking-Device) vorzugsweise über das Internet übermittelt. Die Internetverbindung wird mittels GPRS, UMTS oder WIMAX aufgebaut und die Daten werden über das Internet zu einem Gateway System gesendet.

Mit übertragen wird durch die Sendevorrichtung 5 natürlich auch eine Kennung, die die Identifikation des Transportmittels 1 ermöglicht. Durch eine manuelle oder automatische Eingabe an der Sendevorrichtung 5 können ggf. zusätzliche Daten übermittelt werden. Diese Daten könnten z. B. sein: Fahrzeug frei/besetzt, geplante Route, freie Ladefläche in m² und Gewicht.

Die Rechenmittel 3 verarbeiten automatisch die eingehenden Geokoordinaten bzw. Zustandsdaten der "Objekte" (z. B. Fahrzeug), die von der Sendevorrichtung 5 gesendet wurden. Hierdurch wird eine Echtzeit-Aktualität der Daten erreicht. Es ist somit in der Suchmaschine hinterlegt, ob ein Fahrzeug für einen Transport zur Verfügung steht und wo sich dieses Fahrzeug aktuell befindet.

Zu der Abfrage der Datenbank 2 durch den Versender über den Versender-Rechner 7 sei folgendes angemerkt:

Die Suche nach einem Transportmittel 1 mittels der "Internetsuchmaschine" beginnt vorzugsweise nicht mit der Eingabe eines Textes, sondern es kann vorgesehen werden, dass eine Landkarte angezeigt wird, auf der mit der Computer-Maus durch den Versender sowohl der Startort O_{S} als auch der Zielort O_{Z} grafisch markiert wird. Aufgrund der von der Sendevorrichtung 5 übermittelten (Positions-)Daten werden alle Fahrzeuge 1 in dem markierten Kartenausschnitt angezeigt, die sich aktuell an diesem Ort bzw. in einem Bereich um den Ort herum befinden und ihre Bereitschaft zum Transport übermittelt haben.

Der Versender kann daraufhin durch Eingabe weiterer Kriterien (z. B. Personenbeförderung, Paketfracht oder Stückgutfracht) die Anzahl der verfügbaren Fahrzeuge 1 weiter einschränken. Er wird dabei mittels eines Assistentensystems systematisch geführt. Nach der ersten Selektion (z. B. "Personentransport") erfolgt gegebenenfalls eine weitere Selektion, z. B. wie Anzahl der Personen oder Größe und Gewicht des Transportguts, was zu transportieren ist.

Diese Daten sind der Suchmaschine als Parameter P der Transportmittel 1 bekannt, nämlich durch die vorherige Profileingabe der teilnehmenden Anwender. Durch die Selektion in der Suchmaschine werden die Fahrzeuge, die nicht in Frage kommen, ausgeblendet. Nach erfolgter Selektion erscheint jeweils eine Auflistung der verfügbaren Transportmittel, die dem Anforderungsprofil entsprechen. Dabei kann auch gleich die Angabe der Fahrer bzw. Fahrzeuginhaber (Spedition) erfolgen, um mittels angezeigter Kontaktdaten den Kontakt herstellen zu können.

Die Positionsfeststellung mittels des GPS-Verfahrens ist hinlänglich bekannt und braucht hier nicht näher erläutert zu werden.

Die erwähnte Internetverbindung ist vorzugsweise eine Verbindung nach dem UMTS-Standard, dem GPRS-Standard oder dem WiMax-Standard.

UMTS ist ein standardisiertes System für die universelle Mobilfunk-Telekommunikation. Vor allem im Bereich der Multimediatechnik eröffnet UMTS dank seiner sehr hohen Übertragungsraten leistungsfähige Multimediadienste. UMTS integriert die Leistungsmerkmale der Leistungsvermittlung der GSM-Technik (Groupe Spéciale Mobile/global system mobile) und der Paketvermittlung der GPRS-Technik (s. unten) und schafft dadurch gute Voraussetzungen für schnellen Datentransfer. Darüber hinaus enthält UMTS Spezifikationen, die den Transport von Daten auf der Grundlage des IP-Protokolls unterstützen und so die Verwendung von UMTS für einen funkgestützten Internet-Zugang ermöglichen. Der Dienst ist visuell orientiert, wobei die UMTS-Mobiltelefone Videotelefonie und Streaming von Audio und Videoclips unterstützen.

GPRS ist ein spezielles System für die Übertragung von Informationen über das GSM-Netzwerk. Hierbei werden die Daten in einzelne Pakete aufgeteilt, wobei jedes dieser Pakete mit zusätzlichen Informationen versehen wird. Diese übermitteln dem Netzwerk, wie die einzelnen Pakete zusammenhängen und wer die Nachricht empfangen soll. Ermöglicht wird dies durch die IP(Internet Protocol)-Technologie, die auch im Internet zum Einsatz kommt und eine Datenübertragung ohne eine direkte leitungsvermittelnde Verbindung zum Empfänger möglich macht. Mit Hilfe des GPRS-Systems können die Pakete durch verschiedene Kanäle des Netzwerks geleitet werden, was die Nutzung freier Kapazitäten ermöglicht. Die Pakete werden dann beim Empfänger in der richtigen Reihenfolge zu einem Ganzen zusammengefügt.

Die GSM-Funkkanäle sind in acht Zeitschlitze unterteilt, von denen jeder eine Datenübertragungsrate von 9,6 Kilobit pro Sekunde (kbit/s) hat. Bei einer normalen GSM-Datenübertragung belegt der Anwender während der kompletten Dauer seiner Verbindung einen Zeitschlitz und macht somit Gebrauch von den gesamten 9,6 kbit/s. Wenn alle GSM-Zeitschlitze belegt sind, können keine weiteren Personen auf die Netzwerk-Verbindungen zugreifen. Der Anwender muss unabhängig von der übertragenen Datenmenge bei einer normalen GSM-Datenübertragung für die gesamte Verbindungszeit, die für die Datenübertragung benötigt wird, bezahlen.

Bei der GPRS-Technologie stehen die Zeitschlitze mehreren Nutzern gleichzeitig zur Verfügung. Damit kann, durch das Versenden individuell adressierter Informationspakete, die Kapazität des Netzwerks gezielter genutzt werden, beispielsweise in Übertragungspausen, die bei der herkömmlichen GSM-Datenübertragung ungenutzt bleiben würden. Zudem bietet dieses System ein effektiveres Kostenmanagement, da die Abrechnung nach Datenmenge und nicht nach Verbindungsdauer erfolgt.

WiMax (Worldwide Interoperability for Microwave Access) ist eine drahtlose Technologie für die Daten-Hochgeschwindigkeitsübertragung. WiMax ist eine Fortentwicklung der Funk-LANs und zeichnet sich durch eine Übertragungsgeschwindigkeit von bis zu 74 Mbit/s aus, bei einer Reichweite von bis zu 50 km.

### Bezugszeichenliste:

- 1: Transportmittel
- 2: ortsfestes Speichermittel
- 3: Rechenmittel
- 4: Datenfernübertragungseinrichtung
- 5: Sendevorrichtung
- 6: Ortungssystem
- 7: Versender-Rechner
- 8: Betätigungselement

- P: Parameter
- O_{I}: Aufenthaltsort des Transportmittels
- O_{S}: Startort eines gewünschten Transports
- O_{Z}: Zielort des Transportmittels
- S: Information
- A: Anfrage
- B: Bereich

## Patentansprüche

1. Verfahren zum Belegen von Transportmitteln (1) mit zu transportierenden Personen und/oder Gütern, bei dem ein über eine Datenfernübertragungseinrichtung (4) abrufbares ortsfestes Speichermittel (2) zum Einsatz kommt, in dem bzw. aus dem Daten von zur Verfügung stehenden Transportmitteln (1) gespeichert und abrufbar sind, wobei das Speichermittel (2) mit einem Rechenmittel (3) in Verbindung steht, das über die Datenfernübertragungseinrichtung (4) mit Nutzern kommunizieren kann,
**dadurch gekennzeichnet, dass**
das Verfahren die Schritte aufweist:
a) Speichern eines Satzes Parameter (P) für eine Vielzahl von Transportmitteln (1) in dem Speichermittel (2), wobei der Satz Parameter die für den Transport relevanten Informationen eines Transportmittels (1) beinhaltet;
b) Auslösen einer Sendefunktion durch den Führer des Transportmittels (1), durch das eine Sendevorrichtung (5) betätigt wird, die die Schritte veranlasst:
b₁) Ermitteln des Aufenthaltsortes (O_{I}) des Transportmittels (1) mittels eines Ortungssystems (6);
b₂) Übermitteln einer Information (S) an das Speichermittel (2), das zumindest den Aufenthaltsort (O_{I}) des Transportmittels (1) sowie die Mitteilung umfasst, dass das Transportmittel (1) für einen Transportauftrag zur Verfügung steht;
c) Übermitteln einer Anfrage (A) von einem Versender-Rechner (7) über die Datenfernübertragungseinrichtung (4) an das Rechenmittel (3), wobei die Anfrage zumindest einen Startort (O_{S}) eines gewünschten Transports umfasst;
d) Automatisches Auslesen der im Speichermittel (2) gespeicherten Informationen über alle verfügbaren Transportmittel (1), deren Aufenthaltsort (O_{I}) innerhalb eines vorgegebenen Bereichs (B) um den vorgegebenen Startort (O_{S}) liegt; und
e) Übertragen von Informationen über die Identität des Transportmittels (1) bzw. des Führers des Transportmittels (1) für zumindest einen Teil der gemäß Schritt d) ausgelesenen Transportmittel (1) von dem Rechenmittel (3) über die Datenfernübertragungseinrichtung (4) an den Versender-Rechner (7) zur Ermöglichung der Kontaktaufnahme mit dem Führer des Transportmittels (1) durch den den Versender-Rechner (7) benutzenden Versender.

2. Verfahren nach Anspruch 1, **dadurch gekennzeichnet, dass** die nach Schritt b₂) gemäß Anspruch 1 übermittelten Informationen (S) weiterhin einen Zielort (O_{Z}) des Transportmittels (1) umfassen, den der Führer des Transportmittels (1) in die Sendevorrichtung (5) eingibt.

3. Verfahren nach Anspruch 1 oder 2, **dadurch gekennzeichnet, dass** die nach Schritt b₂) gemäß Anspruch 1 übermittelten Informationen (S) weiterhin eine im Transportmittel (1) zur Verfügung stehende Transportkapazität umfassen, die der Führer des Transportmittels (1) in die Sendevorrichtung (5) eingibt.

4. Verfahren nach einem der Ansprüche 1 bis 3, **dadurch gekennzeichnet, dass** die nach Schritt b₂) gemäß Anspruch 1 übermittelten Informationen (S) weiterhin eine geplante Startzeit für die Abfahrt aus dem Bereich (B) umfassen, die der Führer des Transportmittels (1) in die Sendevorrichtung (5) eingibt.

5. Verfahren nach einem der Ansprüche 1 bis 4, **dadurch gekennzeichnet, dass** die nach Schritt a) gemäß Anspruch 1 gespeicherten Parameter (P) besondere Merkmale des Transportmittels (1) umfassen, insbesondere die Ladekapazität für Personen bzw. Güter, die Möglichkeit zum Gefahrguttransport, die Möglichkeit zum Kühltransport oder die zur Verfügung stehenden Zielorte oder -länder.

6. Verfahren nach einem der Ansprüche 1 bis 5, **dadurch gekennzeichnet, dass** die nach Schritt c) gemäß Anspruch 1 übermittelte Anfrage (A) weiterhin einen Zielort (O_{Z}) des gewünschten Transports umfasst, den der Versender an die Rechenmittel (3) überträgt.

7. Verfahren nach einem der Ansprüche 1 bis 6, **dadurch gekennzeichnet, dass** die nach Schritt c) gemäß Anspruch 1 übermittelte Anfrage (A) weiterhin weitere Merkmale des Transportmittels (1) umfassen, insbesondere die benötigte Ladekapazität für Personen bzw. Güter, das Benötigen eines Gefahrguttransports oder das Benötigen eines Kühltransports.

8. Verfahren nach einem der Ansprüche 1 bis 7, **dadurch gekennzeichnet, dass** die nach Schritt c) gemäß Anspruch 1 übermittelte Anfrage (A) weiterhin einen gewünschten vorgegebenen Bereich (B) um den vorgegebenen Startort (O_{S}) umfasst, der bei Schritt d) gemäß Anspruch 1 zugrunde gelegt wird.

9. Verfahren nach einem der Ansprüche 6 bis 8, **dadurch gekennzeichnet, dass** das automatische Auslesen der im Speichermittel (2) gespeicherten Informationen nach Schritt d) gemäß Anspruch 1 so erfolgt, dass nur solche Transportmöglichkeiten ausgegeben werden, die die durch die Anfrage (A) definierten Bedingungen erfüllen.

10. Verfahren nach einem der Ansprüche 1 bis 9, **dadurch gekennzeichnet, dass** die Ortung nach Schritt b₁) gemäß Anspruch 1 durch das Ortungssystem (6) durch eine GPS-Ortung erfolgt.

11. Verfahren nach einem der Ansprüche 1 bis 9, **dadurch gekennzeichnet, dass** die Ortung nach Schritt b₁) gemäß Anspruch 1 durch das Ortungssystem (6) durch eine Galilei-Ortung erfolgt.

12. Verfahren nach einem der Ansprüche 1 bis 11, **dadurch gekennzeichnet, dass** die Kommunikation der Sendevorrichtung (5) mit dem Rechenmittel (3) und/oder die Kommunikation des Versender-Rechners (7) mit dem Rechenmittel (3) über das Internet mittels GPRS, UMTS oder WIMAX erfolgt.

13. System zum Belegen von Transportmitteln (1) mit zu transportierenden Personen und/oder Gütern, die ein mit einem Rechenmittel (3) in Verbindung stehendes und über eine Datenfernübertragungseinrichtung (4) abrufbares ortsfestes Speichermittel (2) umfasst, in dem bzw. aus dem Daten von zur Verfügung stehenden Transportmitteln (1) gespeichert und abrufbar sind, zur Durchführung des Verfahrens nach einem der Ansprüche 1 bis 12,
**dadurch gekennzeichnet, dass**
das System weiterhin für eine Vielzahl von Transportmitteln (1) und eine Vielzahl von Versendern umfasst:
Sendevorrichtungen (5), die jeweils in einem Transportmittel (1) angeordnet sind, wobei jede Sendevorrichtung (5) ein Ortungssystem (6) aufweist, das den Aufenthaltsort (O_{I}) des Transportmittels (1) ermitteln kann, und wobei jede Sendevorrichtung (5) ein Betätigungselement (8) aufweist, mit dem die Sendevorrichtung (5) zum Aussenden eines Signals (S) an das Speichermittel (2) veranlasst werden kann, und
Versender-Rechner (7) zur Eingabe von Anfragen (A) über ein gewünschtes Transportmittel (1), wobei jeder Versender-Rechner (7) über eine Datenfernübertragungseinrichtung (4) mit dem Rechenmittel (3) in Verbindung treten kann.

14. System nach Anspruch 13, **dadurch gekennzeichnet, dass** das Ortungssystem (6) ein GPS-Ortungssystem ist.

15. System nach Anspruch 13, **dadurch gekennzeichnet, dass** das Ortungssystem (6) ein Galileo-Ortungssystem ist.
